# EUROPEAN PATENT APPLICATION

(11) **EP 4 099 019 A1**
(43) Date of publication of application: **07.12.2022**
(21) Application number: 20917254.3
(22) Date of filing: 10.12.2020
(51) Int. Cl.: G01N 35/00

(54) **AUTOMATIC ANALYSIS SYSTEM**

(30) Priority: 30.01.2020 JP 2020013416
(71) Applicant: Hitachi High-Tech Corporation, Minato-ku Tokyo 105-6409 (JP)
(72) Inventor: YANO Shigeru, Tokyo 105-6409 (JP); IMAI Kenta, Tokyo 105-6409 (JP); TAMEZANE Hideto, Tokyo 105-6409 (JP); Chida Saori, Tokyo 105-6409 (JP)
(74) Representative: MERH-IP Matias Erny Reichl Hoffmann Patentanwälte PartG mbB
(86) International application number: PCT/JP2020/046110
(87) International publication number: WO 2021/153028

(57) **Abstract**

The purpose of the present invention is to provide an automatic analysis system which, even when a large number of quality control samples is necessary, reduces the time necessary for quality control. To this end, this automatic analysis system is provided with multiple analysis devices (190), a conveyance unit (120) to which the analysis devices (190) are connected, and an operation unit (101) which operates the conveyance unit (120) to convey samples to the analysis device (190), wherein the automatic analysis system has a common storage cabinet (210) for storing the quality control samples that can be supplied to the multiple analysis devices (190), and in accordance with a rule registered in advance for each of the multiple analysis devices (190), the operation unit (101) operates the storage cabinet (210) to automatically convey a quality control sample to an analysis device (190).

## Description

### Technical Field

The present invention relates to an automatic analysis system in which a plurality of analysis devices are connected.

### Background Art

In an automatic analysis device, a reagent that specifically reacts with a specific component contained in a sample such as blood or urine is added to and reacted with the sample, and an absorbance, a luminescence amount and the like of a reaction solution are measured to perform a qualitative and quantitative analysis.

In such an automatic analysis device, in order to ensure reliability of an analysis result, a calibration which is a calibration curve calibration operation for obtaining a calibration curve, a quality control for confirming that the calibration curve is appropriate and the like are implemented as necessary. However, there are many types of methods and samples to be used (calibration sample, quality control sample), and handling and management are complicated.

In addition, the following techniques are known for the handling and management of the quality control sample. For example, PTL 1 describes that in an automatic analysis device to which a plurality of functional modules are connected, a cold insulation unit that stores a quality control sample is provided in each of the modules, and the quality control sample is used in the modules as necessary. Further, PTL 2 describes an automatic analysis device that performs a preparation processing such that a quality control sample can be used at a preset time and is provided with a storage unit that stores the quality control sample after the preparation processing.

### Citation List

### Patent Literature

PTL 1: JP-A-2015-57617
PTL 2: JP-A-2015-135282

### Summary of Invention

### Technical Problem

In an automatic analysis system in the related art such as PTL 1 and PTL 2 described above, an operator introduces the quality control sample to the modules, and overall operational time required for a quality control is lengthened. In particular, a large number of quality control samples may be required depending on a type of quality control, and it is difficult to store a large number of quality control samples in the modules and for the operator to introduce the quality control samples.

An object of the invention is to provide an automatic analysis system that reduces time required for a quality control even when a large number of quality control samples are required.

### Solution to Problem

In order to achieve the above object, the invention provides an automatic analysis system that includes a plurality of analysis devices, a conveyance unit to which the analysis devices are connected, and an operation unit configured to operate the conveyance unit and convey a sample to the analysis devices. The automatic analysis system includes a common storage cabinet that stores a quality control sample that is suppliable to the plurality of analysis devices, and in accordance with a rule registered in advance for each of the plurality of analysis devices, the operation unit operates the storage cabinet to automatically convey the quality control sample to the analysis device.

### Advantageous Effects of Invention

According to the invention, an automatic analysis system that reduces time required for a quality control even when a large number of quality control samples are required can be provided.

### Brief Description of Drawings

[FIG. 1] FIG. 1 is a schematic diagram showing an entire configuration of an automatic analysis system according to an embodiment.
[FIG. 2] FIG. 2 is a plan view showing a configuration of a storage cabinet according to the embodiment.
[FIG. 3] FIG. 3 is a flowchart showing operations in an automatic analysis system according to a first embodiment.
[FIG. 4] FIG. 4 is a diagram showing a table related to storage conditions of a quality control sample.
[FIG. 5] FIG. 5 is a flowchart showing steps for determining whether to store the quality control sample.
[FIG. 6] FIG. 6 is a flowchart showing operations in an automatic analysis system according to a second embodiment.

### Description of Embodiments

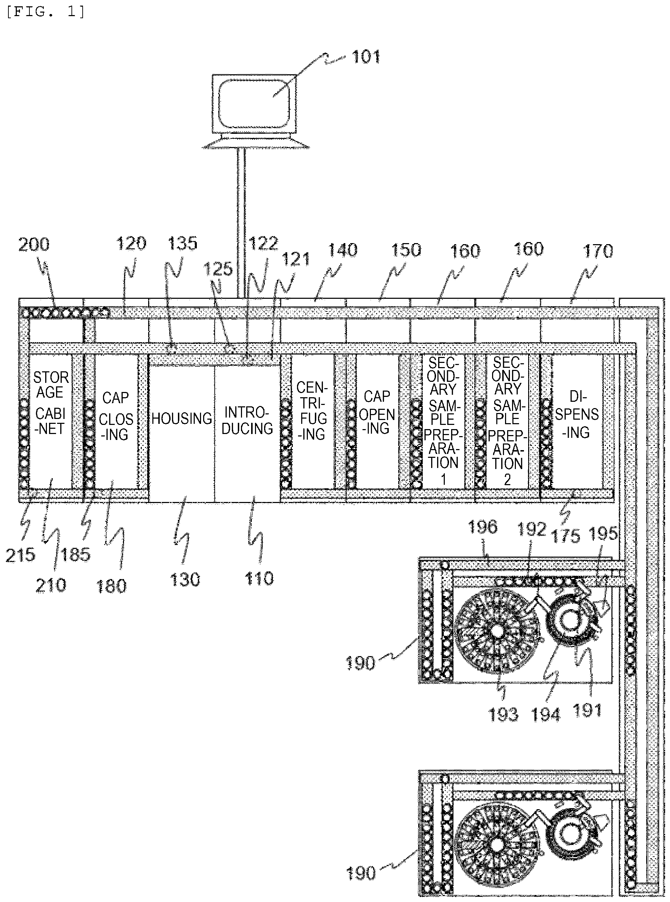

FIG. 1 is a schematic diagram showing an entire configuration of an automatic analysis system according to an embodiment of the invention. As shown in FIG. 1, the automatic analysis system according to the present embodiment includes an introducing unit 110, a conveyance unit 120, a centrifugal unit 140, a cap opening unit 150, a secondary-sample container preparation unit 160, a dispensing unit 170, a cap closing unit 180, a housing unit 130, a plurality of analysis devices 190, an operation unit 101 and a storage cabinet 210.

Here, the introducing unit 110 introduces a sample container 200 (test tube) storing a sample (specimen) such as blood or urine into the automatic analysis system. A sample recognition unit 121, a cap body detection unit 122, and a carrier recognition unit 125 are provided in the introducing unit 110. The sample recognition unit 121 reads a barcode attached to the sample container 200 and identifies a sample to be conveyed. The cap body detection unit 122 captures an image of the sample container 200, analyzes the captured image, and identifies the type of the sample container 200 and the presence or absence of a cap body and the type of the cap body. The carrier recognition unit 125 reads ID information applied to a carrier holding the sample container 200. Carrier recognition units 135, ..., 175, 185, and 215 corresponding to the carrier recognition unit 125 are provided in units in the automatic analysis system.

Next, the conveyance unit 120 is a mechanism that conveys the sample container 200 introduced from the introducing unit 110 and a sample container (secondary container) dispensed in the dispensing unit 170 to units such as the centrifugal unit 140, the dispensing unit 170 and the analysis devices 190. The centrifugal unit 140 centrifuges the introduced sample container 200 and separates the sample into a serum component and a blood clot component. The cap opening unit 150 opens the cap body from the introduced sample container 200. The secondary-sample container preparation unit 160 prepares matters necessary for dispensing the sample stored in the introduced sample container 200 into the subsequent dispensing unit 170, for example, another sample container (secondary container), and attaches a barcode label or the like to the prepared sample container 200. The dispensing unit 170 parcels out the centrifugally separated serum component into other empty sample containers (secondary containers) for analysis by the analysis devices 190 described later. The cap closing unit 180 closes the treated sample container 200 and the secondary container. The housing unit 130 houses the sample container 200 and the secondary container closed by the cap closing unit 180.

The analysis devices 190 are conveyance destinations of the samples treated in the units in the automatic analysis system, and correct and quantitatively analyze components of the samples. Each of the analysis devices 190 includes a sample dispensing mechanism 191, a reagent dispensing mechanism 192, a reagent disk 193, a reaction disk 194, a detection mechanism 195, and a conveyance line 196 that constitutes a part of the conveyance unit 120.

Here, the sample dispensing mechanism 191 aspirates and discharges the sample in the sample container 200. The reagent disk 193 stores a reagent required for component analysis of the sample. In addition, the reagent dispensing mechanism 192 aspirates and discharges the reagent. The detection mechanism 195 measures optical properties of a mixture in a reaction cell of the reaction disk 194 and transmits measured data to the operation unit 101.

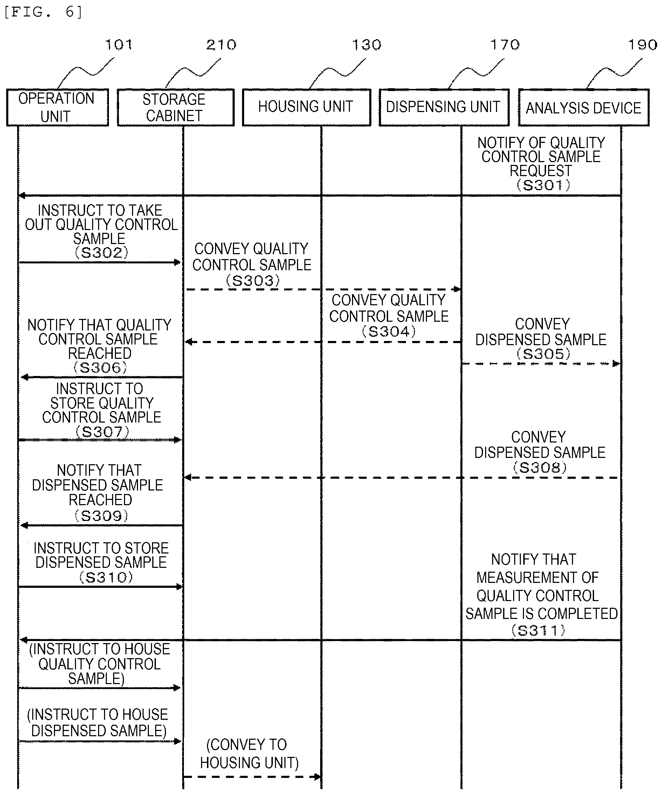

The operation unit 101 includes a processor such as a central processing unit (CPU), a storage device, a communication device, an input device, a display device, and the like. The operation unit 101 controls operations of the units in the automatic analysis system, and analyzes measurement data in the analysis devices 190. In particular, regarding the control of the operations of the units in the automatic analysis system, for example, as specifically shown in FIG. 6, the operation unit 101 may have a function of transmitting an instruction for executing operations related to pretreatment units such as the introducing unit 110, the conveyance unit 120 and the centrifugal unit 140 described above, and the storage cabinet 210. Further, for example, when the number of analysis devices 190 is large, the operations of the units in the automatic analysis system may be controlled by the operation units 101 that are separately provided for the analysis devices 190 and for the pretreatment units.

Apart from a cold insulation cabinet for the reagent required for the analysis, the storage cabinet 210 refrigerates and stores a quality control sample and a pooled serum after a preparation processing (hereinafter, referred to as the "quality control sample").

In the automatic analysis system according to the present embodiment, a quality control is performed in order to keep the accuracy of an analysis result of each of the analysis devices 190 at a certain level or more. Here, regarding under what conditions the quality control is executed, a rule is registered in advance in each of the analysis devices 190. An agreement regarding a time interval for implementing the quality control can be considered as the rule, for example, the quality control is implemented every two hours. In addition, an agreement on the number of measurements of a general sample which is a condition for implementing the quality control also can be considered as another rule, for example, the quality control is implemented every time 100 general samples are measured. Further, when there are plural numbers of types of samples used for the quality control, information for identifying the type of the quality control sample is also included in the rule. The rule registered in advance is not necessarily the same for each analysis device 190, and may be set differently.

The analysis devices 190 are connected in the automatic analysis system according to the present embodiment, and when there are many general samples to be measured, the analysis devices 190 execute the same test. At this time, since the analysis devices 190 usually start a measurement processing almost at the same time, a timing at which the quality control is required may be almost the same. Therefore, if an operator individually introduces the quality control sample to each of the automatic analysis devices as in the related art, it is difficult to introduce a large number of quality control samples almost at the same time, and time required for the quality control is long. However, according to the present embodiment, since the operation unit 101 operates the storage cabinet 210 in accordance with the rule registered in advance for each of the analysis devices 190 to automatically convey the quality control sample to a predetermined analysis device, the time required for the quality control can be reduced.

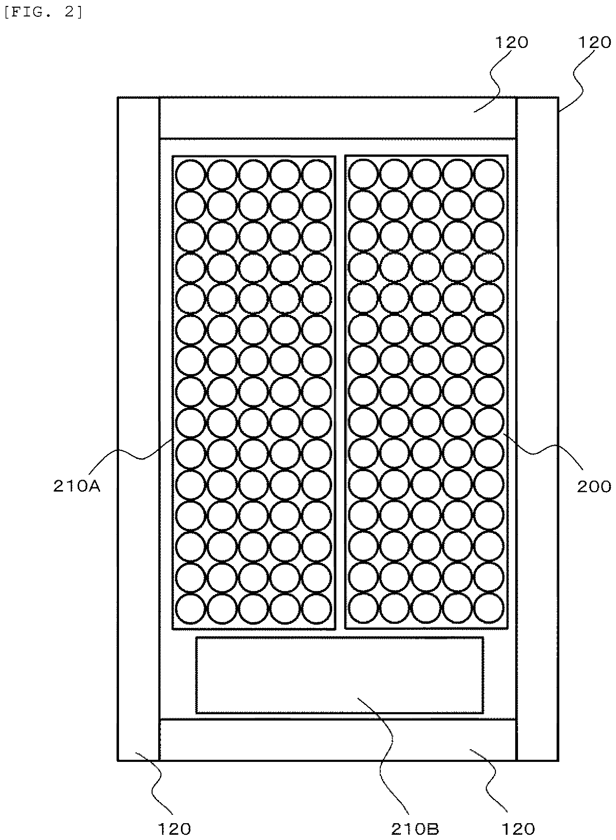

Here, the storage cabinet 210 according to the present embodiment is a common storage cabinet that stores the quality control sample that may be supplied to the analysis devices 190. FIG. 2 is a plan view showing a configuration of the storage cabinet 210 according to the present embodiment. As shown in FIG. 2, the storage cabinet 210 according to the present embodiment includes a quality control sample tray 210A that can set a large number of the sample containers 200, and a discard box 210B for discarding the quality control sample that is unusable on a basis of the sample containers 200. In addition, the sample container 200 stored in the storage cabinet 210 has a one-dimensional barcode, an RFID tag on which an identification code is recorded, or the like, so that the internal quality control sample can be identified.

When each of the analysis devices 190 is provided with an individual storage cabinet, it is difficult to provide a space where a large storage cabinet is disposed in each of the analysis devices 190. Accordingly, the number of the quality control samples that can be stored is inevitably limited. In contrast, the storage cabinet 210 according to the present embodiment can efficiently store the quality control sample that may be supplied to the analysis devices 190 in one place. In particular, a large number of quality control samples may be required for one analysis device 190 depending on the type of the quality control, and this case can be dealt with when a large number of the quality control samples are provided in the dedicated storage cabinet 210 as in the present embodiment.

When a large number of quality control samples are required to be introduced, a plurality of the storage cabinets 210 may be provided, and the storage cabinets 210 may supply the quality control samples to the analysis devices 190. Accordingly, even when no large storage cabinet 210 is provided, a certain number of quality control samples can be stored by combining the plurality of the storage cabinets 210. In addition, when the quality control samples are conveyed from one storage cabinet 210 to the analysis devices 190 at the same time, there is a possibility that the conveyance unit 120 downstream of the storage cabinet 210 is congested and the conveyance is difficult. However, if the quality control samples are conveyed from the storage cabinets 210 to the respective analysis devices 190 in such a manner that each of the storage cabinets 210 does not overlap with conveyance paths of other storage cabinets 210, the congestion of the conveyance unit 120 can be alleviated, and the time required for the quality control can be reduced.

Next, operations of the automatic analysis system according to the present embodiment will be described.

### First Embodiment

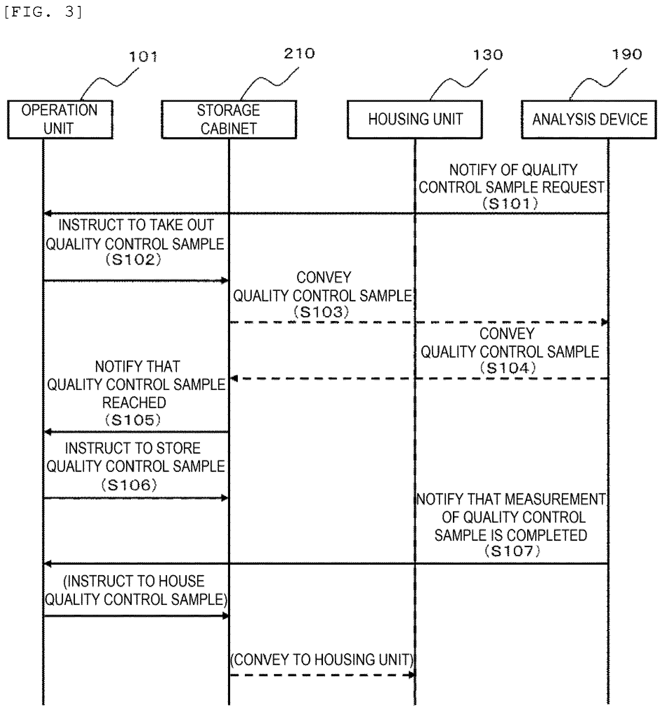

FIG. 3 is a flowchart showing operations in an automatic analysis system according to a first embodiment. First, the operator fills the sample containers 200 with the quality control sample, and sets the sample containers 200 in the quality control sample tray 210A of the storage cabinet 210. The number and setting positions of the quality control samples to be set are registered in advance by the operation unit 101, and the operator performs an operation according to a registered content.

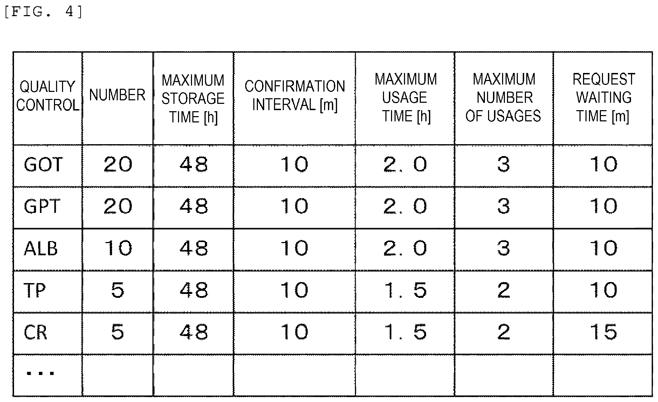

The analysis devices 190 notify the operation unit 101 of information that is a trigger of the quality control as quality control sample request information based on the rule registered in advance in the analysis devices 190 (step S101). At this time, the operation unit 101 waits for 10 minutes after receiving a first quality control request information so that the same type of quality control request information can be received from other analysis devices 190, and determines whether one quality control sample can be used for the quality control of the plurality of analysis devices 190. A request waiting time during which the operation unit 101 waits for quality control requests from the plurality of analysis devices 190 can be set by the operation unit 101 for each type of quality control (see FIG. 4).

When the request waiting time elapses, the operation unit 101 instructs the storage cabinet 210 to take out the target sample container 200 filled with the quality control sample based on the quality control request information from the analysis device 190 (step S102). The storage cabinet 210 receives the instruction and takes out the target sample container 200, and the conveyance unit 120 conveys the sample container 200 (quality control sample) to the analysis device 190 that notifies of the request (step S103). Further, the analysis device 190 measures the conveyed quality control sample.

When the operation unit 101 also receives the same type of request from other analysis devices 190, the quality control sample used for the quality control in one analysis device 190 is sequentially conveyed to other analysis devices 190 by the conveyance unit 120, and is also used for the measurements by other analysis devices 190. Therefore, it is not necessary to individually introduce the quality control sample to each of the analysis devices 190. Here, in an automatic analysis system in the related art, the operator needs to individually introduce the quality control sample to each of the analysis devices even for the same type of quality control, and thus according to the first embodiment, it is possible to reduce the operation of the operator.

Further, when the measurement by the analysis device 190 is completed, the conveyance unit 120 returns the quality control sample from the analysis device 190 to the storage cabinet 210 (step S104). When the quality control sample reaches the storage cabinet 210, the storage cabinet 210 notifies the operation unit 101 that the quality control sample reached (step S105).

Regarding the quality control sample returned to the storage cabinet 210, the operation unit 101 refers to a table registered in advance and confirms whether parameters satisfy conditions. When all the conditions are satisfied, the operation unit 101 instructs the storage cabinet 210 to store the quality control sample in the storage cabinet 210 (step S106). The operation unit 101 also confirms a remaining volume of the quality control sample, and when the remaining volume is small, the operation unit 101 instructs the storage cabinet 210 to, for example, discard the quality control sample into the discard box 210B.

Here, for each of the quality control samples, the operation unit 101 counts parameters such as elapsed time since the quality control sample is first set in the storage cabinet 210 (storage time), the number of times the quality control sample is taken out from the storage cabinet 210 (the number of usages), and time during which the quality control sample is taken out from the storage cabinet 210 (usage time). Further, when one quality control sample is used for the measurements by the plurality of analysis devices 190 when the quality control sample is taken out from the storage cabinet 210 and then is returned to the storage cabinet 210, the parameters are counted multiple times.

FIG. 4 is a diagram showing the table related to storage conditions of the quality control sample. In the table, a maximum storage time, a maximum usage time, a maximum number of usages and the like are registered for each type of quality control sample. The maximum storage time indicates an upper limit on time during which the quality control sample can be stored in the storage cabinet 210. The maximum usage time indicates an upper limit on time during which the quality of the quality control sample can be ensured even when the quality control sample is placed in a normal temperature environment. When the time during which the quality control sample is placed in the normal temperature environment with one usage is almost constant, the maximum number of usages may be used instead of the maximum usage time. For example, when the time required for the quality control sample to be conveyed from the storage cabinet 210 and be returned to the storage cabinet 210 after passing though the plurality of analysis devices 190 is 5 minutes, the maximum usage time of 20 minutes corresponds to the maximum number of usages of 4 times. Considering that a risk of contamination increases with the measurement of the quality control sample, the maximum number of usage may be set separately from the maximum usage time.

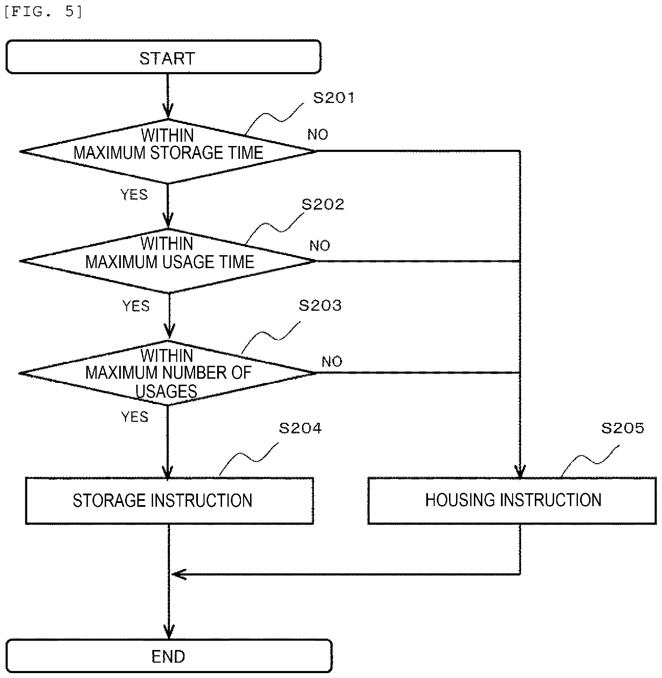

FIG. 5 is a flowchart showing steps for determining whether to store the quality control sample. As shown in FIG. 5, regarding the quality control sample returned to the storage cabinet 210, the operation unit 101 compares time during which the quality control sample is refrigerated and stored in the storage cabinet 210 with the maximum storage time (step S201). When the time exceeds the maximum storage time, the operation unit 101 instructs the storage cabinet 210 to convey the quality control sample to the housing unit 130 (step S205) . The operation unit 101 may instruct the storage cabinet 210 to discard the quality control sample into the discard box 210B instead of conveying the quality control sample to the housing unit 130. When the quality control sample is conveyed from the storage cabinet 210 to the housing unit 130, the conveyance unit 120 is used.

When the time is within the maximum storage time, the operation unit 101 compares counted usage time with the maximum usage time (step S202). When the counted usage time exceeds the maximum usage time, the operation unit 101 instructs the storage cabinet 210 to convey the quality control sample to the housing unit 130 or to discard the quality control sample into the discard box 210B (step S205).

When the counted usage time is within the maximum usage time, the operation unit 101 compares the counted number of usages with the maximum number of usages (step S203). When the counted number of usages exceeds the maximum number of usages, the operation unit 101 instructs the storage cabinet 210 to convey the quality control sample to the housing unit 130 or to discard the quality control sample into the discard box 210B (step S205). When the counted number of usages is within the maximum number of usages, the operation unit 101 instructs the storage cabinet 210 to store the quality control sample (step S204).

In this way, in the first embodiment, when at least one of the maximum storage time of the quality control sample, the maximum usage time of the quality control sample and the maximum number of usages of the quality control sample is exceeded, the quality control sample is set to be not stored, and thus it is possible to ensure the accuracy of the quality control at a certain level or more.

In the automatic analysis system according to the first embodiment, even when a quality control sample request is not notified of by the analysis device 190, the operation unit 101 ensures the quality of the quality control sample by checking a quality control sample that exceeds the maximum storage time at confirmation intervals of a predetermined time. As a result of the check, when there is a quality control sample that exceeds the maximum storage time, the storage cabinet 210 conveys the quality control sample to the housing unit 130, or discards the quality control sample into the discard box 210B.

Here, in the automatic analysis system in the related art, the quality control samples that were measured by the analysis devices are left in the housing units of the analysis devices at room temperature, and thus the operator needs to discard a quality control sample that deteriorates due to a long leaving period and reintroduce another quality control sample. However, according to the first embodiment, the quality control sample that was measured by the analysis device 190 is returned to the storage cabinet 210 and is refrigerated and stored, and thus the time during which the quality control sample is placed in the normal temperature environment is less, and the quality control sample can be used for repeated measurements. In addition, in the first embodiment, instead of storing all the quality control samples returned to the storage cabinet 210, the quality control sample is stored only when a predetermined condition is satisfied, and thus the quality of the quality control sample can be ensured.

In the first embodiment, the analysis device 190 notifies the operation unit 101 of the quality control request information at a predetermined timing according to the rule registered in the analysis device 190 itself. The rules of the analysis devices 190 may be aggregated in advance in the operation unit 101, and the operation unit 101 may issue an instruction to the storage cabinet 210 to convey the quality control sample without the notification from the analysis device 190.

### Second Embodiment

When one quality control sample is sequentially conveyed to the different analysis devices 190 as in the first embodiment and the conveyance unit 120 is congested, it may take time to convey the quality control sample that was measured by a first analysis device 190 to second and subsequent analysis devices 190. Therefore, unlike in the first embodiment, in the second embodiment, the quality control sample is dispensed into other empty sample containers 200 by the dispensing unit 170, and the dispensed samples are individually conveyed to the different analysis devices 190.

FIG. 6 is a flowchart showing operations in an automatic analysis system according to the second embodiment. First, similar to the first embodiment, each of the analysis devices 190 notifies the operation unit 101 of the quality control sample request information based on the rule registered in advance in the analysis device 190 itself (step S301). Next, the operation unit 101 instructs the storage cabinet 210 to take out the target quality control sample (step S302). The storage cabinet 210 receives the instruction and takes out the target quality control sample, and the conveyance unit 120 conveys the quality control sample to the dispensing unit 170 (step S303).

Further, the dispensing unit 170 dispenses the quality control sample to other empty sample containers 200 different from the sample container that is filled with the conveyed quality control sample. A barcode label is attached to each of the empty sample containers 200 by the secondary-sample container preparation unit 160. Information indicating that the sample is the dispensed quality control sample, information on the quality control sample that is the dispensing source and the like are recorded on the barcode label as the one-dimensional barcode. In addition, attribute information by which the operator can identify the sample as the quality control sample is recorded on the barcode label with characters or the like.

Then, the quality control sample that is the dispensing source is conveyed to the storage cabinet 210 by the conveyance unit 120 (step S304). When the quality control sample that is the dispensing source reaches the storage cabinet 210, the storage cabinet 210 notifies the operation unit 101 that the quality control sample reached (step S306). Next, regarding the quality control sample that is the dispensing source, the operation unit 101 refers to the table registered in advance and instructs the storage cabinet 210 to store the quality control sample in the storage cabinet 210 when the parameters satisfy the conditions (step S307).

On the other hand, the dispensed sample is conveyed by the conveyance unit 120 to the analysis device 190 that transmitted the quality control request information (step S305). When the measurement by the analysis device 190 is completed, the conveyance unit 120 returns the dispensed sample from the analysis device 190 to the storage cabinet 210 (step S308). Further, the dispensed sample may also be sequentially conveyed to the plurality of analysis devices 190 and be used for the measurement by each of the analysis devices 190. When the dispensed sample reaches the storage cabinet 210, the storage cabinet 210 notifies the operation unit 101 that the dispensed sample reached (step S309). Next, regarding the dispensed sample, the operation unit 101 refers to the table registered in advance and instructs the storage cabinet 210 to store the dispensed sample in the storage cabinet 210 when the parameters satisfy the conditions (step S310).

According to the second embodiment, even when the plurality of analysis devices 190 notify the operation unit 101 of the quality control request information almost at the same time, the quality control sample can be dispensed by the dispensing unit 170 and the dispensed samples can be conveyed to the analysis devices 190, and thus an increase in the time required for the quality control due to the congestion of the conveyance unit 120 can be prevented. In addition, not only the original quality control sample but also the dispensed samples are set to be stored in the storage cabinet 210 only when the predetermined condition is satisfied, and thus the accuracy of the quality control can also be ensured.

Further, the dispensed sample is usually produced in the number used by the target analysis device 190. Accordingly, even when the dispensed sample is returned to the storage cabinet 210, the remaining volume is insufficient, and the dispensed sample will be discarded into the discard box 210B or be conveyed to the housing unit 130. However, it is desirable to temporarily store the dispensed sample in the storage cabinet 210 until the measurement of the quality control sample by the analysis device 190 is completed and the measurement data is obtained. A reason is that when the result of the quality control is inappropriate, it would be determined whether the quality control sample is inappropriate or the analysis device 190 is inappropriate. Therefore, even when the quality control sample including the dispensed sample that is returned to the storage cabinet 210 is to be discarded or the like, the quality control sample is temporarily stored in the storage cabinet 210, and the operation unit 101 waits until the result of the quality control is obtained. When the analysis device 190 notifies the operation unit 101 that the result of the quality control was obtained (step S311), the operation unit 101 instructs the storage cabinet 210 to discard the quality control sample that is temporarily stored, or the like, and the storage cabinet 210 conveys the quality control sample to the housing unit 130 or discards the quality control sample into the discard box 210B.

In addition, the above first and second embodiments have been described in detail for easy understanding of the invention, and the invention is not necessarily limited to those including all the configurations described above. A part of a configuration of one embodiment may be replaced with a configuration of another embodiment, and a configuration of one embodiment may also be added with a configuration of another embodiment. A part of a configuration of each embodiment may be added or replaced with another configuration, and another configuration may be deleted from the configuration of each embodiment.

### Reference Signs List

101 operation unit
110 introducing unit
120 conveyance unit
121 sample recognition unit
122 cap body detection unit
125, 135, 175, 185, 215 carrier recognition unit
130 housing unit
140 centrifugal unit
150 cap opening unit
160 secondary-sample container preparation unit
170 dispensing unit
180 cap closing unit
190 analysis device
191 sample dispensing mechanism
192 reagent dispensing mechanism
193 reagent disk
194 reaction disk
195 detection mechanism
196 conveyance line
200 sample container
210 storage cabinet
210A quality control sample tray
210B discard box

## Claims

1. An automatic analysis system comprising:
a plurality of analysis devices; a conveyance unit to which the analysis devices are connected; and an operation unit configured to operate the conveyance unit to convey a sample to the analysis devices, wherein
the automatic analysis system includes a common storage cabinet that stores a quality control sample that is suppliable to the plurality of analysis devices, and
in accordance with a rule registered in advance for each of the plurality of analysis devices, the operation unit operates the storage cabinet to automatically convey the quality control sample to the analysis device.

2. The automatic analysis system according to claim 1, wherein
when the analysis device notifies the operation unit of information that is a trigger of a quality control, the operation unit instructs the storage cabinet to take out the quality control sample, and the conveyance unit conveys the quality control sample to the analysis device.

3. The automatic analysis system according to claim 1, wherein
the rule includes at least one of a type of a sample used for a quality control, a time interval for implementing a quality control, and the number of measurements of a general sample as a condition for implementing a quality control.

4. The automatic analysis system according to claim 1, wherein
the conveyance unit conveys the quality control sample used in the analysis device into the storage cabinet, and
when at least one of a maximum storage time of the quality control sample, a maximum usage time of the quality control sample, and a maximum number of usages of the quality control sample is exceeded, the storage cabinet does not store the quality control sample, and discards the quality control sample or conveys the quality control sample to a housing unit outside the storage cabinet.

5. The automatic analysis system according to claim 1, further comprising:
a dispensing unit configured to dispense the quality control sample, wherein
a plurality of dispensed samples dispensed by the dispensing unit are conveyed to the different analysis devices.

6. The automatic analysis system according to claim 1, further comprising:
a dispensing unit configured to dispense the quality control sample, wherein
a dispensed sample dispensed by the dispensing unit is conveyed to the analysis device, and
the quality control sample that is a dispensing source is conveyed to the storage cabinet, and is stored in the storage cabinet when a predetermined condition is satisfied.

7. The automatic analysis system according to claim 1, further comprising:
a plurality of the storage cabinets, wherein
the storage cabinets supply the quality control sample to the plurality of analysis devices.
